# EUROPÄISCHE PATENTSCHRIFT

(11) **EP 2 944 906 B1**
(45) Veröffentlichungstag und Bekanntmachung des Hinweises auf die Patenterteilung: **02.10.2019**
(21) Anmeldenummer: 14001681.7
(22) Anmeldetag: 13.05.2014
(51) Int. Cl.: F27B 9/02, F27B 9/26, F27B 9/30

(54) **Ofen zum Brennen von keramischen Formlingen**
Kiln for the firing of ceramic blanks
Four de brûlage d'ébauches en céramique

(43) Veröffentlichungstag der Anmeldung: 18.11.2015
(73) Patentinhaber: Keller HCW GmbH, 49479 Ibbenbüren-Laggenbeck (DE)
(72) Erfinder: Heiner Gausmann, 49205 Hasbergen (DE); Peter Heitmann, 48612 Horstmar (DE); Rainer Hüsing, 48480 Spelle (DE)
(74) Vertreter: Pott, Ulrich

(56) Entgegenhaltungen:
- EP-A1- 1 435 500
- EP-A2- 0 176 071
- DE-A1- 3 538 151
- DE-A1- 4 442 850
- DE-A1-102009 042 311
- GB-A- 228 383
- GB-A- 673 889

## Beschreibung

Die Erfindung bezieht sich auf einen Ofen zum Brennen von keramischen Formlingen, insbesondere von Ziegeln, mit einer Mehrzahl von parallel zueinander und entlang einer längs verlaufenden Ofenstrecke bewegbaren, mehrere Ofenwagen umfassenden Zügen, auf denen die Formlinge anzuordnen sind, wobei die Ofenstrecke eine Brennzone zur Erhitzung der Formlinge aufweist, wobei nebeneinander angeordnete Züge in entgegengesetzte Richtungen bewegbar sind ohne eine Richtungsumkehr durch eine Brennzone, wobei zumindest ein Lüfter vorgesehen ist.

Ein Ofen dieser Art ist aus der DE 10 2011 112 838 A1 bekannt. Bei diesem Ofen erfolgt die Bestückung des Ofens auf der einen Seite der Ofenstrecke, während auf der gegenüberliegenden anderen Seite der Ofenstrecke eine Bestückung der jeweiligen Züge mit Formlingen für einen Transport durch den Ofen entlang der Ofenstrecke in die entgegengesetzte Richtung erfolgt. Dabei findet in den jeweiligen Zügen keine Richtungsumkehr statt, so dass sich die Formlinge auf ihren jeweiligen Ofenzügen durch die Brennzone hindurch bewegen und jeweils am bezüglich ihrer Bestückung entgegengesetzten Ende der Ofenstrecke dieser entnommen werden.

Durch die auf beiden Seiten der Brennzone jeweils aneinander vorbei bewegten Formlinge werden von den bereits die Brennzone verlassenden Formlinge andere als Kaltbesatz aufgeheizt, bevor sie in die Brennzone gelangen. Durch den Verzicht auf eine Richtungsumkehr in der Brennzone wird der zur Verfügung stehende Bauraum des Ofens optimal ausgenutzt. Die Formlinge werden in der Brennzone durch in einer Längsgasse (Haupttunnel) zwischen den Zügen angeordnete Brennelemente erhitzt. Hierdurch kann die verwendete Heizenergie direkt zu den Formlingen gebracht werden, was zu einer erhöhten Effizienz in der Brennzone und mithin zu einem verringerten Energieeinsatz führt. Die Erhitzung der Ziegel oder dergleichen Formlinge kann unmittelbar und gleichmäßig über deren Aufbauhöhe im Besatz verteilt erfolgen. Dieser gattungsgemäße Ofen hat gegenüber herkömmlichen anderen Öfen erhebliche Vorteile, soll jedoch weiter verbessert werden.

Aus der GB-A-228383 ist ein Ofen zum Brennen von keramischen Formlingen der eingangs genannten Art bekannt, bei dem Luft innerhalb des Ofens während der Behandlung kontinuierlich umgewälzt wird. Vor der eigentlichen Brennzone ist ein Raum zur Vorerwärmung vorgesehen, die durch Tore oder Blenden von der eigentlichen Brennzone sowie von der Außenumgebung zu schließen ist. Zur Beschickung und auch zur Entleerung der einzelnen Ofenwagen sind diese über die Tore in außerhalb des Ofens gelegene Entlade- bzw. Beladungsräume zu bringen, so dass dabei die Ofenwagen den Umgebungstemperaturen ausgesetzt sind. Dabei können sie stark abkühlen, was den energetischen Wirkungsgrad des Ofens beeinträchtigt.

Es ist Aufgabe der vorliegenden Erfindung, einen Ofen der eingangs genannten Art weiter zu optimieren.

Zur Lösung dieser Aufgabe zeichnet sich der Ofen der eingangs genannten Art dadurch aus, dass dem Ofen zur Bestückung mit Formlingen eine als Schleuse ausgebildete Beschickungsstation vorgeschaltet und/oder nachgeschaltet ist, die zwei Tore aufweist, von denen ein Tor zum Ofen hin öffnet und ein anderes Tor zu einem Umgebungsraum öffnet. Dabei ist das zu einem Umgebungsraum öffnende Tor durch einen horizontal translatorisch bewegbares in einer Decke der Beschickungsstation vorgesehenes Schiebetor ausgebildet ist.

Damit ist ein Ofen geschaffen, bei dem in raumsparender Art und Weise jeweils sichergestellt ist, dass sowohl bei der Beschickung des Ofens als auch bei der Entnahme von gebrannten Formlingen das Tor zum Ofen hin immer geschlossen ist, auch wenn das Tor in der Beschickungsstation für einen Beschickungs- oder für einen Entnahmevorgang zu öffnen ist. Um diesem raumsparend Rechnung zu tragen, ist bevorzugterweise das Tor in der Beschickungsstation als horizontal ausgerichtetes und translatorisch bewegbares Schiebetor ausgebildet, wohingegen das Tor zum Ofen hin von der Beschickungsstation aus als vertikal ausgerichtetes Schiebe- oder Zugtor ausgebildet sein kann.

Hinsichtlich wesentlicher weiterer vorteilhafter Ausgestaltungen wird auf weitere Unteransprüche, die nachfolgende Beschreibung und die Zeichnung verwiesen. In der Zeichnung zeigen:

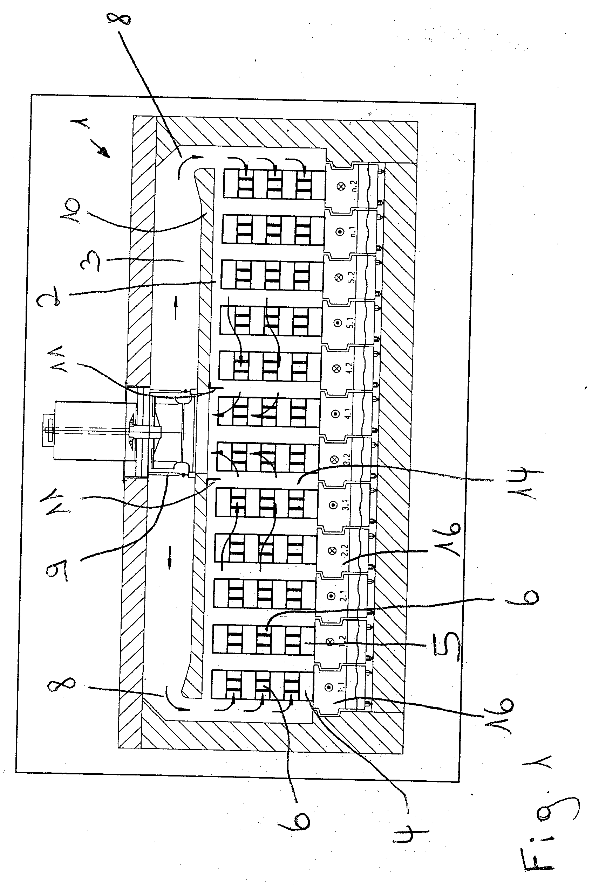

- Fig. 1: in einer schematischen Querschnittsdarstellung ein Ausführungsbeispiel eines Ofens mit einem Radialventilator als Lüfter;
- Fig. 2: eine schematische Seitenansicht (ausschnittsweise) des Ofens mit der vorgesehenen Beschickungsstation;

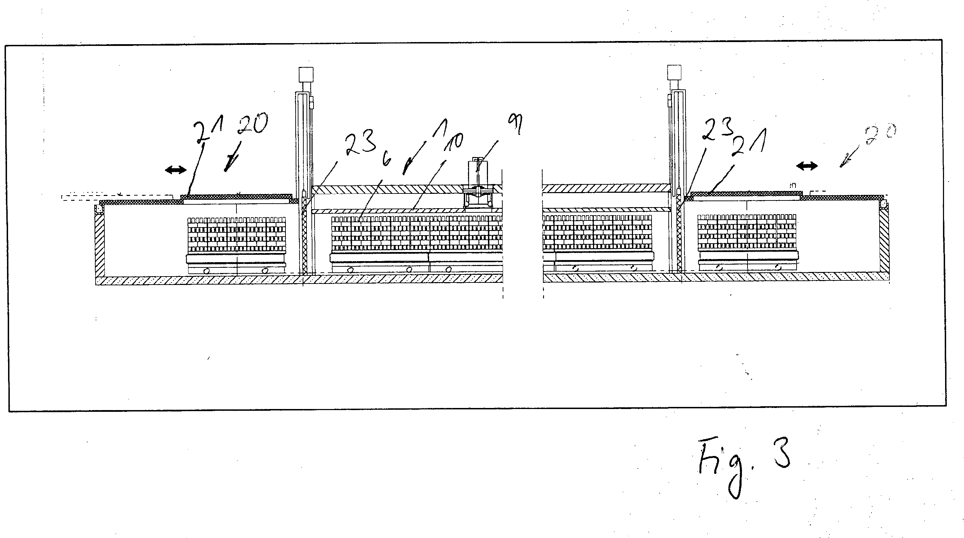

- Fig. 3: eine zu Fig. 2 analoge Darstellung mit zwei Beschickungsstationen, einmal an der einen Seite des Ofens und einmal an der anderen gegenüberliegenden Seite des Ofens.

In der Zeichnung sind grundsätzlich übereinstimmende Teile mit übereinstimmenden Bezugsziffern versehen.

Allgemein mit 1 ist der Ofen beziffert, der eine Ofenstrecke 2 aufweist mit einer Brennzone, einem Umwälzkanal 3 und Kühl- und Aufwärmzonen. In dem Ofen 1 sind in den Ausführungsbeispielen insgesamt zwölf Züge 4, 5 dargestellt, wobei jeweils ein Zug 4 in eine Richtung aus der Zeichnungsebene heraus bewegt wird und der Zug 5 in entgegengesetzte Richtung, also in die Zeichnungsebene hinein bewegt wird.

Ein Zug 4, der mit Formlingen 6 bestückt ist genauso wie der Zug 5, kann einen kalten Besatz haben, wogegen der Zug 5 einen warmen, also schon gebrannten Besatz an Formlingen 6 hat, so dass jeweils abwechselnd nebeneinander kalte und warme Züge 4, 5 transportiert werden mit Ausnahme des ersten Zuges ganz links in den Zeichnungsblättern und dem rechten letzten Zug, wobei der erste Zug 4 einen kalten Besatz hat und der letzte rechte Besatz einen warmen Besatz hat. Der warme Besatz kann daher nur an der rechten Außenseite seine Wärme an den links benachbarten Besatz dieses Zuges abgeben kann, der wiederum ein kalter Besatz ist. In dem gezeigten Ausführungsbeispiel kann dieser Zug seine Wärme an die Luft 8 abgeben, die von dem Lüfter 9, der in dem gezeigten Ausführungsbeispiel ein Radialverdichter ist, angesaugt wird, so dass über den Radialventilator 9 eine Zwangskonvektion innerhalb des Ofens 1 und entlang der Ofenstrecke stattfindet.

Unterhalb des Umwälzkanals 3 ist eine Wandung 10 vorgesehen, an der Luftleitvorrichtungen 11 vorgesehen sind, die verhindern, dass Luft 8 unter Umgehung der Formlinge 6 an der Wandung 10 entlanggefördert wird.

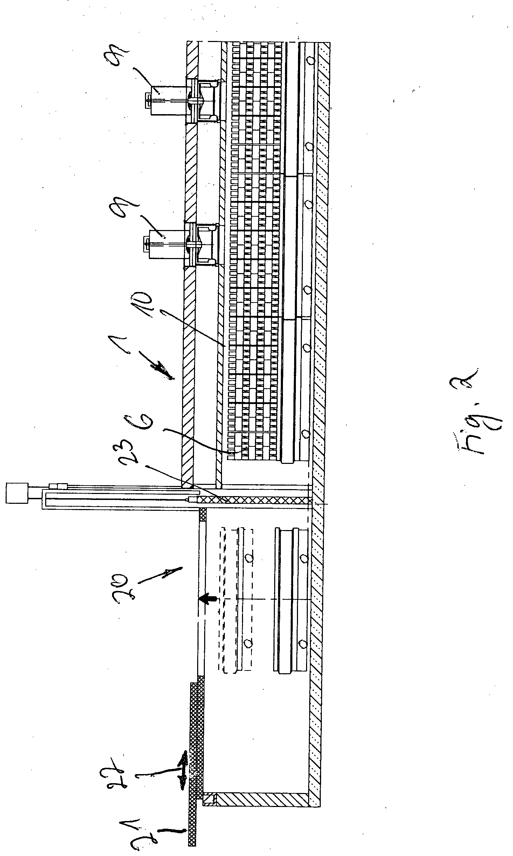

Wie näher Fig. 2 zu entnehmen ist, ist im Ofen 1 sowohl links als auch rechts, d. h. in beiden Transportrichtungen der Züge 4 und 5 jeweils eine Beschickungsstation 20 vorgesehen mit jeweils einem horizontal beweglichen Schiebetor 21, das in Pfeilrichtung 22 zu bewegen ist. Dem Ofen 1 ist ein vertikal ausgerichtetes Tor 23 zugeordnet, wobei die Tore 21 und 23 derart gesteuert sind, das immer sichergestellt ist, dass beim Öffnen des Schiebetors 21 der Beschickungsstation das Tor 23 in seine Schließstellung fährt bzw. in dieser verbleibt.

## Patentansprüche

1. Ofen (1) zum Brennen von keramischen Formlingen (6), insbesondere von Ziegeln, mit einer Mehrzahl von parallel zueinander und entlang einer längs verlaufenden Ofenstrecke bewegbaren, mehrere Ofenwagen (16) umfassenden Zügen (4, 5), auf denen die Formlinge (6) anzuordnen sind, wobei die Ofenstrecke eine Brennzone zur Erhitzung der Formlinge (6) aufweist, wobei nebeneinander angeordnete Züge (4, 5) in entgegengesetzte Richtungen ohne eine Richtungsumkehr durch eine Brennzone bewegbar sind, wobei zumindest ein Lüfter (9) vorgesehen ist, **dadurch gekennzeichnet, dass** dem Ofen (1) zur Bestückung mit Formlingen (6) eine als Schleuse ausgebildete Beschickungsstation (20) vorgeschaltet und/oder nachgeschaltet ist, die zwei Tore (22, 23) aufweist, von denen ein Tor (23) zum Ofen (1) hin öffnet und ein anderes Tor (22) zu einem Umgebungsraum öffnet, wobei das zu einem Umgebungsraum öffnende Tor (22) durch ein horizontal translatorisch bewegbares, in einer Decke der Beschickungsstation (20) vorgesehenes Schiebetor ausgebildet ist.

2. Ofen nach Anspruch 1, **dadurch gekennzeichnet, dass** das zum Ofen (23) hin öffnende Tor als ein vertikal ausgerichtetes Schiebetor ausgebildet ist.

3. Ofen nach Anspruch 1 oder 2, **dadurch gekennzeichnet, dass** die Tore (22, 23) miteinander mit ihrem Betätigungsmechanismus derart steuerbar sind, dass bei geöffnetem Tor zum Ofen hin das Tor zu dem Umgebungsraum hin geschlossen ist.

## Claims

1. Kiln (1) for firing ceramic formed bodies (6), in particular bricks, comprising a plurality of trains (4, 5) which comprise a number of kiln cars (16) and are movable in parallel with one another and along a longitudinal kiln portion, and on which the formed bodies (6) are to be arranged, the kiln portion having a firing zone for heating the formed bodies (6), trains (4, 5) which are arranged side-by-side being movable in opposite directions through a firing zone, without a reversal of direction, and at least one fan (9) being provided, **characterised in that** a loading station (20) for providing formed bodies (6) is connected upstream and/or downstream of the kiln (1), which station is designed as a lock and has two gates (22, 23), of which one gate (23) opens to the kiln (1) and another gate (22) opens to a surrounding space, the gate (22) opening to a surrounding space being formed by a sliding gate which is horizontally translationally movable and is provided in a ceiling of the loading station (20).

2. Kiln according to claim 1, **characterised in that** the gate opening to the kiln (23) is designed as a vertically oriented sliding gate.

3. Kiln according to either claim 1 or claim 2, **characterised in that** the gates (22, 23) can be controlled together by means of their actuating mechanism, such that when the gate to the kiln is open, the gate to the surrounding space is closed.

## Revendications

1. Four (1) de brûlage d'ébauches céramiques (6), en particulier de briques, avec une pluralité de carneaux (4, 5) comprenant plusieurs chariots de four (16), mobiles parallèlement les uns aux autres et le long d'un parcours de four s'étendant longitudinalement, sur lesquels les ébauches (6) sont à agencer, dans lequel le parcours de four présente une zone de brûlage pour le chauffage des ébauches (6), dans lequel des carneaux (4, 5) agencés l'un à côté de l'autre sont mobiles dans des sens opposés sans changement de direction par une zone de brûlage, dans lequel au moins un ventilateur (9) est prévu, **caractérisé en ce qu'**un poste de chargement (20) réalisé comme sas est monté en amont et/ou en aval du four (1) pour l'équipement d'ébauches (6), dont une porte (23) ouvre vers le four (1) et une autre porte (22) ouvre vers un espace ambiant, dans lequel la porte (22) ouvrant vers un espace ambiant est réalisée par une porte coulissante prévue dans un plafond du poste de chargement (20), mobile par translation horizontale.

2. Four selon la revendication 1, **caractérisé en ce que** la porte ouvrant vers le four (23) est réalisée comme une porte coulissante orientée verticalement.

3. Four selon la revendication 1 ou 2, **caractérisé en ce que** les portes (22, 23) peuvent être commandées entre elles avec leur mécanisme d'actionnement de telle manière qu'en cas de porte ouverte vers le four, la porte soit fermée vers l'espace ambiant.
